# FASCICULE DE BREVET EUROPEEN

(11) **EP 0 545 780 B1**
(45) Date de publication et mention de la délivrance du brevet: **01.05.1996**
(21) Numéro de dépôt: 92403175.0
(22) Date de dépôt: 25.11.1992
(51) Int. Cl.: G01T 7/02

(54) **Appareil de mesure de l'activité alpha d'une solution**
Messgerät für Alpha-Aktivität einer Lösung
Measuring apparatus for the alpha activity of a solution

(30) Priorité: 29.11.1991 FR 9114828
(43) Date de publication de la demande: 09.06.1993
(73) Titulaire: COGEMA COMPAGNIE GENERALE DES MATIERES NUCLEAIRES, F-78141 Velizy-Villacoublay (FR)
(72) Inventeur: Marteau, Claude, F-84000 Avignon (FR); Durand, Marcel, F-84500 Bollene (FR)
(74) Mandataire: Dubois-Chabert, Guy

(56) Documents cités:
- FR-A- 2 482 312
- US-A- 3 826 918
- NUCLEAR INSTRUMENTS & METHODS IN PHYSICS RESEARCH, vol. 225, no. 1, Août 1984, Amsterdam, NL, pp. 179-184; A. ROBERT et al.: 'Measurement system for alpha emitters in solution'
- PATENT ABSTRACTS OF JAPAN vol. 7, no. 282 (P-243)(1427) 16 Décembre 1983 ; & JP-A-58 156 876

## Description

L'invention concerne un appareil permettant de mesurer l'activité α d'une solution, notamment dans une usine de retraitement de combustibles nucléaires irradiés, en vue de déterminer avec précision la concentration en plutonium de cette solution.

L'activité α des solutions traitées dans les usines de retraitement des combustibles nucléaires irradiés résulte, pour l'essentiel, du plutonium présent dans ces solutions. La mesure de cette activité α permet donc de déterminer avec précision la concentration en plutonium des solutions sur lesquelles les mesures sont effectuées.

Pour mesurer cette activité α, on a recours à des appareils spécifiques qui prennent en compte à la fois le faible rayon d'action du rayonnement α (quelques mm) et la présence de rayonnements β et γ dans ces mêmes solutions. Comme l'illustre notamment le document FR-A-2 482 312, on utilise généralement à cet effet des appareils dans lesquels un film de solution est prélevé par un tambour tournant autour d'un axe horizontal, dans une cuve à niveau constant, de façon à amener ce film devant une sonde de mesure placée au-dessus du tambour.

Afin que les résultats des mesures effectuées sur la solution à contrôler puissent être exploités, l'appareil doit aussi permettre le contrôle de qualité de la sonde de mesure et de la chaîne de mesure, en présence d'une source de référence de valeur connue, ainsi qu'une mesure de la réponse de la sonde à blanc, c'est-à-dire lorsqu'aucun rayonnement ne lui parvient.

Pour parvenir à ce résultat, il est proposé dans le document FR-A-2 482 312 de placer une source de référence à l'extrémité d'une tirette permettant d'escamoter cette source, ou au contraire de l'amener en face de la sonde de mesure. Le fonctionnement de la sonde à blanc est contrôlé quant à lui en plaçant dans le bac une solution exempte de tout rayonnement α. Une circulation de gaz est en outre assurée dans la partie supérieure de la cuve, afin d'éviter qu'une pellicule de la solution présente dans cette dernière ne vienne se déposer par condensation sur la face inférieure de la sonde de mesure, ce qui fausserait les mesures.

L'appareil décrit dans le document FR-A-2 482 312 a cependant pour inconvénient d'être très difficile à mettre en oeuvre lorsqu'on désire mesurer la réponse de la sonde de mesure en l'absence de tout rayonnement α. En effet, cela suppose comme on l'a vu de faire cesser la circulation de la solution à analyser à l'intérieur de la cuve, pour faire circuler dans cette dernière une solution à blanc dépourvue de tout rayonnement α.

Par ailleurs, la circulation de gaz qui est supposée éviter la condensation sur la face inférieure de la sonde de mesure est conçue de telle sorte qu'elle n'empêche pas un dépôt par condensation sur la sonde si le débit ou la pression de gaz est trop faible. De plus, des débits ou pressions de gaz élevés engendrent des turbulences qui conduisent également à des dépôts de solution sur la sonde.

L'invention a précisément pour objet un appareil de mesure de l'activité α d'une solution, conçu selon le même principe général que l'appareil décrit dans le document FR-A-2 482 312, mais dans lequel il est plus facile de contrôler la réponse de la sonde de mesure en l'absence de rayonnement α, le risque pour que les mesures soient faussées, par suite d'un dépôt de la solution à analyser, par condensation ou par turbulence, sur la sonde et sur les parties de l'appareil situées entre la sonde et le tambour, étant par ailleurs très sensiblement réduit.

Conformément à l'invention, ce résultat est obtenu au moyen d'un appareil de mesure de l'activité α d'une solution, comprenant une cuve apte à recevoir la solution, fermée par un couvercle ; un tambour monté rotatif sur un axe horizontal à l'intérieur de la cuve, de façon à tremper dans la solution présente dans cette dernière ; des moyens d'entraînement du tambour en rotation dans un sens donné ; une sonde de mesure de rayonnement α, montée au-dessus du tambour ; des moyens de soufflage d'un gaz de protection dans une partie haute de la cuve ; et des moyens de reprise de ce gaz ; caractérisé par le fait qu'il comprend de plus un disque obturateur, monté rotatif sur un axe vertical, à l'intérieur de la cuve, de façon à pouvoir présenter entre le tambour et la sonde de mesure une région de mesure comportant une fenêtre, une région de contrôle de qualité de la chaîne de mesure comportant une source de référence, et une région pleine, décalées de 120° l'une par rapport à l'autre autour dudit axe vertical ; lesdits moyens de soufflage comprenant une tubulure d'entrée de gaz de protection, raccordée sur des passages traversant le couvercle de la cuve et débouchant au-dessus du disque obturateur en trois emplacements situés en face de chacune desdites régions, lesdits passages ayant des sections telles que le gaz de protection est distribué en chacun des trois emplacements sensiblement avec le même débit ; lesdits moyens de reprise comprenant une tubulure de sortie de gaz de protection, traversant également le couvercle de la cuve.

Dans un mode de réalisation préféré de l'invention, un premier des passages chemine dans le couvercle selon une direction sensiblement horizontale, orthogonale à l'axe horizontal du tambour, et coïncidant avec le sens de rotation de ce dernier, pour déboucher au-dessus du disque obturateur par une ouverture circulaire située au-dessous de la source de mesure.

Avantageusement, la tubulure de sortie débouche alors dans la cuve en une zone située à l'opposé de la sonde de mesure, par rapport au premier passage. Cette zone peut notamment être située au-delà du bord périphérique du disque obturateur.

Pour permettre une protection efficace de la zone périphérique du disque obturateur, au-delà de la fenêtre formée dans ce dernier, un passage dérivé débouche au-dessus du disque obturateur entre l'ouverture circulaire précitée et une partie adjacente du bord périphérique du disque.

Toujours selon un mode de réalisation préféré de l'invention, le deuxième et le troisième passages débouchent dans la cuve en deux emplacements situés à 120° de la sonde de mesure, par rapport à l'axe vertical du disque obturateur, par deux évidements circulaires munis de tamis.

Pour protéger également la zone périphérique du disque obturateur lorsque la fenêtre formée dans ce dernier se trouve dans l'un ou l'autre de ces deux emplacements, chacun des tamis comporte une encoche qui débouche à proximité du bord périphérique du disque obturateur.

En outre, des passages de moindre section débouchent aussi, avantageusement, au-dessus d'une zone périphérique du disque obturateur, entre les emplacements précités.

On décrira maintenant, à titre d'exemple non limitatif, un mode de réalisation préféré de l'invention, en se référant aux dessins annexés, dans lesquels :
- la figure 1 est une vue en élévation, en coupe partielle, illustrant de façon schématique un appareil de mesure réalisé conformément à l'invention ;
- la figure 2 est une vue en coupe comparable à la figure 1 illustrant à plus grande échelle le couvercle de la cuve de l'appareil et les parties attenantes ; et
- la figure 3 est une vue en perspective éclatée représentant, en vue de dessous, les différentes pièces formant dans la pratique le couvercle de la cuve, ainsi que le disque obturateur, en vue de dessus.

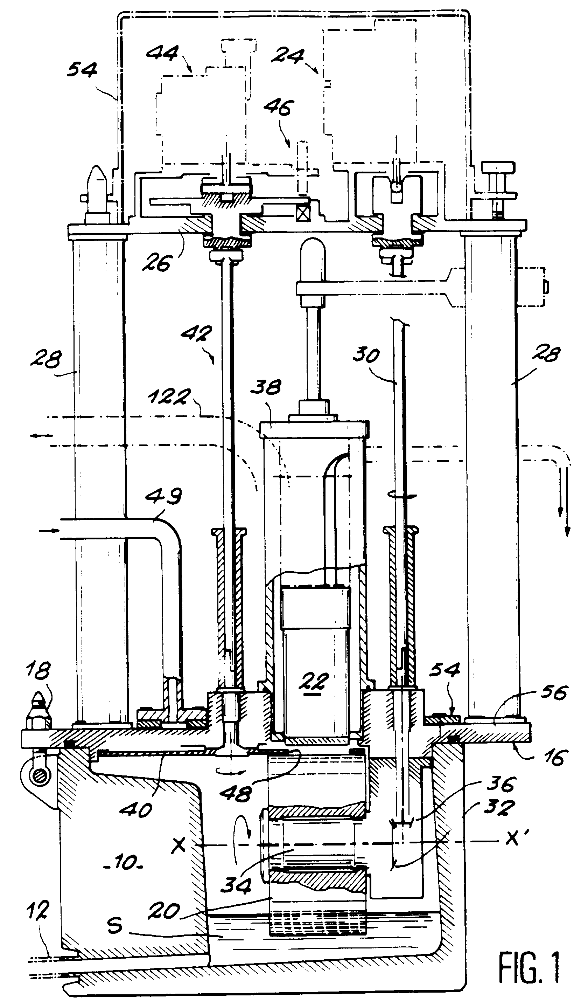

Sur la figure 1, la référence 10 désigne une cuve de mesure, dans laquelle une solution S à analyser est introduite et évacuée par deux canalisations (non représentées) orthogonales au plan de la figure. Ces canalisations sont agencées de telle sorte que le niveau de la solution S à l'intérieur de la cuve 10 reste sensiblement constant, lorsque la solution circule en continu. Une canalisation de vidange 12 apparaît sur la figure 1.

A son extrémité supérieure, la cuve 10 est obturée de façon étanche par un couvercle horizontal 16. Le montage et le démontage de ce couvercle sont avantageusement assurés par des moyens de fixation télémanipulables tels que des boulons 18 basculants et imperdables.

Un tambour 20 est monté rotatif à l'intérieur de la cuve 10, autour d'un axe horizontal XX′ matérialisé par un arbre 34, solidaire d'une console verticale 36 fixée sous le couvercle 16.

Le sous-ensemble formé par le tambour 20, et la console 36, portant l'arbre d'entraînement vertical du tambour et l'accouplement, est démontable, ce qui permet son remplacement éventuel.

Le dimensionnement et l'agencement du tambour 20 sont tels que sa partie inférieure baigne en permanence dans la solution S qui circule dans la cuve 10, alors que sa génératrice supérieure se trouve à une très faible distance (quelques mm) de la face inférieure du couvercle 16. Plus précisément, la génératrice supérieure du tambour 20 se trouve immédiatement en dessous de la face inférieure d'une sonde de mesure 22, qui est montée au-dessus du couvercle 16 et traverse ce dernier de façon étanche.

Le tambour 20 permet ainsi, lors de sa rotation à vitesse constante, d'amener un film de la solution S devant la sonde de mesure 22, tout en formant écran entre la solution S présente dans la cuve et la sonde de mesure 22, vis-à-vis des rayonnements β et γ émis par la solution. Pour contrôler au mieux l'épaisseur du film de solution transporté en face de la sonde de mesure 22 par le tambour 20, ce dernier présente une surface extérieure de tres fine rugosité.

Comme l'illustre très schématiquement la figure 1, l'entraînement en rotation à vitesse constante du tambour 20 est assuré par un ensemble motoréducteur 24 qui est monté sur une plaque support horizontale 26 supportée par des colonnettes 28 fixées sur la face supérieure du couvercle 16. L'ensemble motoréducteur 24 entraîne en rotation un arbre vertical 30 qui traverse de façon étanche le couvercle 16 et entraîne en rotation, par son extrémité inférieure, le moyeu du tambour 20, par l'intermédiaire de pignons de renvoi d'angle 32.

La sonde de mesure 22 peut notamment être constituée par une sonde de détection à scintillation qui compte les particules α émises par la solution. L'axe vertical de cette sonde 22 coupe l'axe horizontal XX′ du tambour 20. La sonde 22 est placée dans un boîtier étanche 38 dont l'extrémité inférieure est reçue dans un logement circulaire traversant le couvercle 16, au-dessus du tambour 20.

L'appareil de mesure selon l'invention comprend de plus un disque obturateur 40, de faible épaisseur, qui est placé dans la cuve 10 immédiatement en dessous du couvercle 16. Plus précisément, ce disque obturateur 40 est un disque plan, qui est solidaire d'un arbre vertical 42 traversant de façon étanche le couvercle 16 et situé en un emplacement diamétralement opposé à celui occupé par l'arbre 30, par rapport à l'axe de la sonde de mesure 22. En outre, l'agencement du disque obturateur 40 est tel qu'une partie de ce disque se trouve située entre le tambour 20 et la sonde de mesure 22.

Le disque obturateur 40 peut être entraîné en rotation autour de son axe vertical par un deuxième ensemble motoréducteur 44 monté sur la plaque support 26. A cet effet, l'arbre de sortie de l'ensemble motoréducteur 44 est en prise sur l'extrémité supérieure de l'arbre vertical 42. La plaque support 26 porte également des moyens d'indexage illustrés schématiquement en 46 sur la figure 1, grâce auxquels le disque obturateur 40 peut être immobilisé dans trois positions préétablies, disposées à 120° les unes des autres autour de l'axe vertical de l'arbre 42.

Ces trois positions correspondent respectivement à une position de mesure de l'activité α de la solution à analyser, à une position de contrôle de qualité de la chaîne de mesure et à une position de mesure à blanc, c'est-à-dire en l'absence de rayonnement α, permettant aux utilisateurs d'être informés d'un éventuel dépôt par condensation d'un film de solution sur la face inférieure de la sonde 22 exposée dans la cuve 10. A ces trois positions du disque obturateur 40 correspondent trois régions de ce disque aptes à être situées entre le tambour 20 et la sonde de mesure 22.

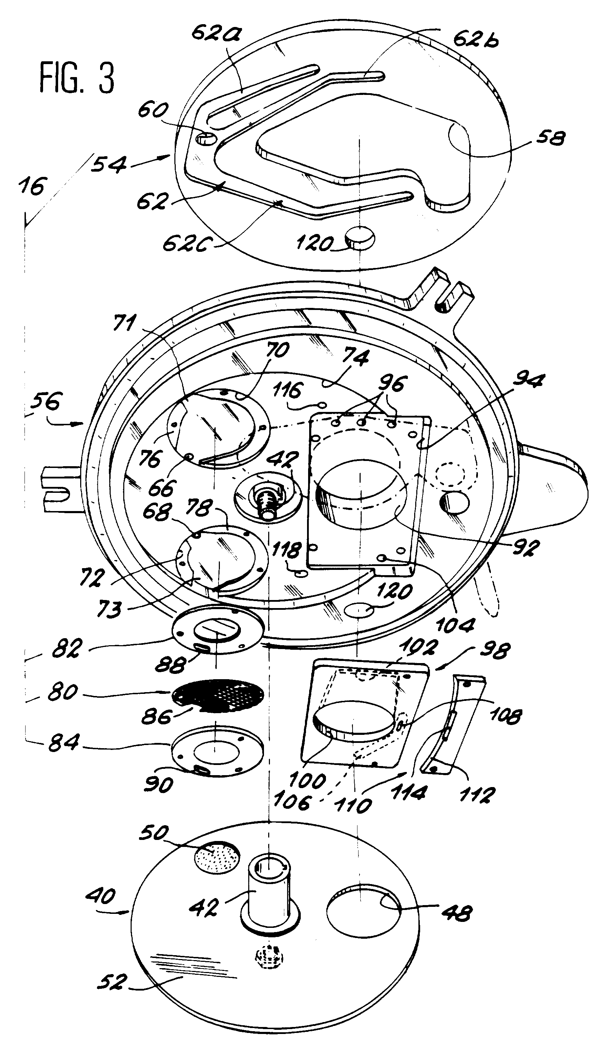

La première région, qui permet de mesurer l'activité α de la solution S à analyser, se présente sous la forme d'une fenêtre circulaire 48 (figure 3).

La deuxième région, qui permet le contrôle de qualité de la chaîne de mesure comprend une source de référence 50, émettant des rayonnements α, logée dans un évidement circulaire formé sur la face supérieure du disque 40.

Enfin, la troisième région, qui permet l'exécution de mesures à blanc, en l'absence de rayonnement α, correspond à une région pleine du disque 40, espacée de 120° autour de l'axe vertical de ce dernier par rapport à la fenêtre circulaire 48 et à la source de référence 50. Cette région pleine est repérée symboliquement par des croix en 52 sur la figure 3.

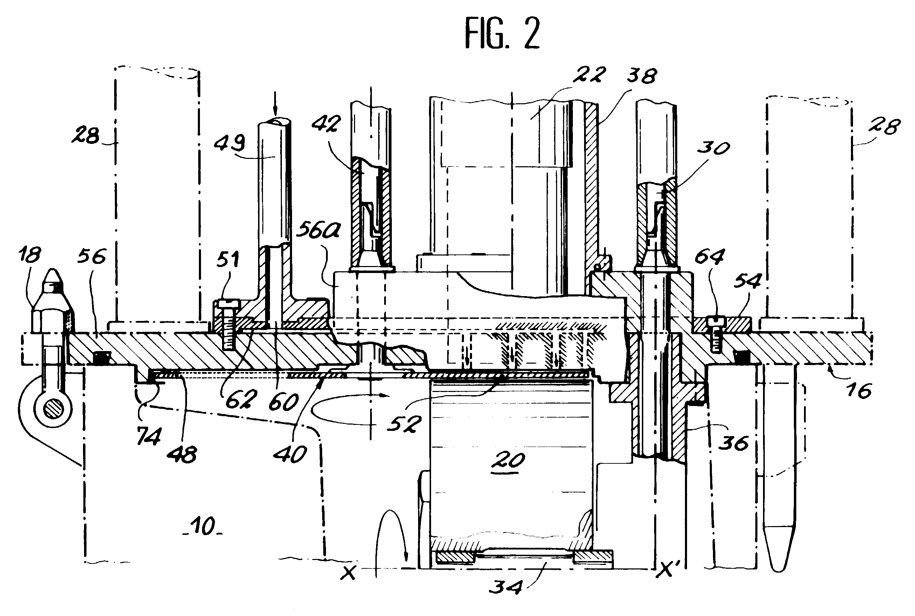

Lorsque la fenêtre circulaire 48 se trouve en face de la sonde de mesure 22, comme on l'a représenté schématiquement sur la figure 1, le rayonnement α émis par le film de solution transporté par le tambour 20 parvient à la sonde de mesure 22, de telle sorte que cette dernière peut effectuer la mesure de ce rayonnement. Lorsque la source de référence 50 est amenée devant la sonde de mesure 22, c'est au contraire le rayonnement α connu émis par cette source de référence qui est détecté par la sonde de mesure 22, de telle sorte que la qualité de la chaîne de mesure peut être contrôlée. Enfin, lorsque la région pleine 52 du disque obturateur 40 est amenée devant la sonde de mesure 22, comme l'illustre schématiquement la figure 2, les mesures effectuées par la sonde représentent uniquement les rayonnements α parasites fournis par des dépôts de solution dûs à la condensation à la fois sur la face inférieure de la sonde 22 et sur le disque obturateur 40.

Comme l'illustre très schématiquement la figure 1, les différents éléments de l'appareil de mesure qui se trouvent au-dessus du couvercle 16 sont avantageusement assemblés entre eux de façon à pouvoir être démontés à distance à l'aide d'un télémanipulateur. Il en est ainsi, notamment, du montage de la plaque support 26 sur les colonnettes 28, du montage de ces colonnettes sur le couvercle 16, de la fixation d'un capot protecteur 54 sur la plaque support 26, autour des ensembles motoréducteurs 24 et 44, et du montage de ces ensembles motoréducteurs sur la plaque support 26. En outre, les arbres 30 et 42 sont réalisés en plusieurs parties qui viennent en prise les unes dans les autres par simple emboîtement. Il en est de même de la fixation du capot de protection 38 de la sonde de mesure 22 sur le couvercle 16. Les différents moyens utilisés à cet effet ne font pas partie de l'invention, de sorte qu'aucune description détaillée n'en sera faite.

Comme on a déjà eu l'occasion de le mentionner, la précision des mesures effectuées à l'aide d'un appareil tel que celui qui vient d'être décrit en se référant aux figures 1 et 2 pourrait être perturbée par une condensation de la solution sur la face inférieure de la sonde de mesure 22 ainsi que sur les parties du disque obturateur 40 appelées à se trouver en face de cette sonde. Afin de limiter autant que possible ce risque, il a été mis au point un système perfectionné de soufflage d'un gaz de protection dans les zones concernées et de reprise de ce gaz, permettant d'obtenir l'efficacité désirée pour un débit de gaz (par exemple, entre 5 l/min et environ 1,5 l/min) et une aspiration (par exemple, entre environ 5 mm et 35 mm de colonne d'eau) aussi faibles que possible, afin de ne pas perturber le film de solution présenté par le tambour 20 devant la sonde de mesure 22. Ce système de soufflage et de reprise de gaz de protection, qui utilise préférentiellement de l'air mais pourrait utiliser un gaz neutre quelconque, va à présent être décrit en détail en se référant aux figures 2 et 3.

L'air de protection est acheminé jusqu'au couvercle 16 de l'appareil par une tubulure d'entrée d'air 49 qui est fixée sur la face supérieure du couvercle 16 par exemple au moyen de vis 51. L'air de protection acheminé par la tubulure d'entrée 49 est distribué à l'intérieur de la cuve 10 en différents points situés au-dessus du disque obturateur 40, par des passages prévus à cet effet dans l'épaisseur du couvercle 16. Pour l'essentiel, ces passages permettent de distribuer l'air acheminé par la tubulure d'entrée 49 en trois emplacements situés au-dessus du disque obturateur 40 et correspondant respectivement aux régions de ce disque dans lesquelles se trouvent la fenêtre circulaire 48, la source de référence 50 et la région pleine 52.

Comme l'illustre plus précisément la figure 3, la distribution de l'air de protection vers les trois emplacements précités est obtenue dans la pratique en réalisant le couvercle 16 sous la forme de plusieurs pièces assemblées qui comprennent, en partant du haut, une plaque distributrice 54, une plaque 56 formant couvercle, ainsi que différentes pièces complémentaires fixées sous la plaque 56 et qui seront décrites en détail par la suite.

La plaque distributrice 54 comporte dans sa partie centrale un ajourage 58 dont la forme est complémentaire d'une partie supérieure en saillie 56a (figure 2) de la plaque 56 formant couvercle, sur laquelle est fixé le carter 38 entourant la sonde de mesure 22 et que traversent les arbres verticaux 30 et 42.

La plaque distributrice 54 est également traversée par un trou 60 sur lequel est raccordée la tubulure d'entrée d'air 49. Ce trou 60 débouche dans une rainure de distribution d'air 62 usinée sur la face inférieure de la plaque distributrice 54, au point de jonction entre trois branches 62a, 62b et 62c de cette rainure 62. La branche 62a, relativement courte, et la branche 62b, relativement longue, sont situées d'un même côté de l'ajourage 58, alors que la branche 62c, relativement longue, est située de l'autre côté de cet ajourage.

Lorsque la plaque distributrice 54 est fixée sur la plaque 56 formant couvercle, par au moyen de vis 64 comme l'illustre la figure 2, le trou 60 sur lequel est raccordée la tubulure d'entrée d'air 49 est situé à l'opposé de la sonde de mesure 22 par rapport à l'arbre d'entraînement vertical 42 du disque obturateur 40.

La plaque 56 formant couvercle est traversée perpendiculairement à ses faces par un certain nombre de trous qui débouchent tous dans l'une ou l'autre des branches de la rainure 62 lorsque la plaque distributrice 54 est fixée sur la plaque 56 formant couvercle.

Les trous traversant la plaque 56 formant couvercle comportent tout d'abord deux trous 66 et 68 qui débouchent respectivement dans les branches 62a et 62c de la rainure 62, à proximité du trou 60. Chacun de ces trous 66 et 68 débouche respectivement dans un évidement circulaire 70 et 72 formé sur la face inférieure de la plaque 56 formant couvercle, tangentiellement à l'intérieur d'une partie en creux 74, également de forme circulaire, usinée dans cette face inférieure pour recevoir le disque obturateur 40, comme l'illustre la figure 2. De façon plus précise, chacun des trous 66 et 68 débouche à proximité du bord de l'évidement circulaire 70 et 72 correspondant.

Les axes des évidements circulaires 70 et 72 sont disposés à égale distance de l'axe de pivotement vertical du disque obturateur 40 et séparés de 120° l'un par rapport à l'autre et par rapport à la sonde 22, de telle sorte que chacun de ces évidements circulaires se trouve en face de l'une des trois régions 48, 50 et 52 du disque obturateur 40, lorsque la troisième région se trouve en face de la sonde de mesure 22. En outre, le diamètre de chacun des évidements 70 et 72 est sensiblement égal au diamètre de la fenêtre circulaire 48 formée dans le disque 40, afin de permettre un balayage efficace de la face supérieure du disque dans les régions qui sont susceptibles de se trouver en dessous de la sonde de mesure 22.

En dehors des endroits où débouchent les trous 66 et 68 et des régions 71 et 73 immédiatement adjacentes aux bords de la partie en creux 74, chacun des évidements circulaires 70 et 72 présente à sa périphérie un épaulement désigné respectivement par les références 76 et 78 sur la figure 3. Ces épaulements 76 et 78 permettent de fixer, par exemple au moyen de vis (non représentées) un tamis métallique 80, pincé entre deux bagues 82 et 84. Ces tamis 80 permettent de répartir d'une manière relativement uniforme l'air de nettoyage admis dans chacun des évidements 70 et 72 par les trous 66 et 68, afin d'assurer un balayage de la région 48, 50 ou 52 du disque obturateur 40, qui se trouve en face de chacun des évidements.

De plus, on observe sur la figure 3 que chacun des tamis 80 comporte, sur une partie de sa périphérie prévue pour être placée contre le bord périphérique de la partie en creux 74, une encoche 86 qui se trouve située en face de deux encoches 88 et 90 formées respectivement dans les bagues 82 et 84. En combinaison avec les régions 71 et 73 des évidements circulaires 70 et 72, cette caractéristique permet d'injecter préférentiellement une quantité d'air plus importante sur la zone périphérique du disque obturateur 40 qui se trouve placée entre les régions 48, 50 ou 52 de ce disque et son bord périphérique adjacent.

On réalise ainsi une protection efficace de la partie du disque obturateur 40 située entre la fenêtre circulaire 48 et le bord périphérique du disque, lorsque cette fenêtre 48 se trouve en face de l'un ou l'autre des tamis 80. En effet, en l'absence des régions 71 et 73 et des encoches 86, 88 et 90, la majeure partie de l'air injecté par les évidements circulaires 70 et 72 s'échapperait alors par la fenêtre circulaire 48 sans protéger la région périphérique adjacente du disque 40.

En un emplacement situé à 120° par rapport aux évidements circulaires 70 et 72 et à une même distance de l'axe de rotation du disque obturateur 40, la plaque 56 formant couvercle est traversée par un alésage 92 dans lequel est reçue l'extrémité du carter 38 logeant la sonde de mesure 22. Cet alésage 92 débouche au centre d'un évidement 94, de forme rectangulaire, usiné sur la face inférieure de la plaque 56. Les petits côtés de cet évidement rectangulaire 94 sont parallèles au rayon du disque obturateur 40 passant par l'axe de l'alésage 92. Trois trous 96 traversent la plaque 56 formant couvercle, de façon à déboucher par leurs extrémités supérieures dans la partie terminale de la branche 62b de la rainure 62, et par leurs extrémités inférieures, à proximité de l'un des petits côtés de l'évidement rectangulaire 94. Plus précisément, les trous 96 débouchent dans l'évidement rectangulaire 94 du côté amont par rapport à l'alésage 92, en considérant le sens de rotation du tambour 20.

Une plaque déflectrice rectangulaire 98, de mêmes dimensions que l'évidement 94, est fixée dans ce dernier, par exemple au moyen de vis (non représentées). Cette plaque comporte en son centre une ouverture circulaire 100 formée dans le prolongement de l'alésage 92 et dont le diamètre est sensiblement égal à celui de la fenêtre circulaire 48 du disque obturateur 40. Un fraisage 102, usiné sur la face supérieure de la plaque déflectrice 98 et de forme sensiblement trapézoïdale, permet de canaliser l'air issu des trous 96 vers cette ouverture 100. On injecte ainsi l'air dans l'ouverture 100 selon une direction horizontale, orthogonale à l'axe de rotation XX′ du tambour 20, qui coïncide avec le sens de rotation du tambour 20.

La plaque 56 formant couvercle est également traversée, à proximité du bord de l'évidement rectangulaire 94 opposé à celui le long duquel débouchent les trous 96, par un trou 104. Comme le montre bien la figure 3, ce trou 104 communique par son extrémité supérieure avec l'extrémité de la branche 62c de la rainure 62 usinée dans la plaque distributrice 54. Par ailleurs, le trou 104 débouche par son extrémité inférieure à l'extrémité d'un couloir 106 usiné sur la face supérieure de la plaque déflectrice 98. L'extrémité opposée du couloir 106 est située entre l'ouverture circulaire 100 et le bord de la plaque déflectrice 98 tourné vers l'extérieur, par rapport à l'axe de rotation du disque obturateur 40, lorsque la plaque déflectrice est fixée sous la plaque 56 formant couvercle.

Dans cette partie de la plaque déflectrice 98 située entre l'ouverture circulaire 100 et le bord opposé à l'axe de rotation du disque obturateur 40, la plaque déflectrice 98 est traversée par une encoche 108 qui débouche dans le couloir 106. Cette encoche 108 débouche sur la face inférieure de la plaque déflectrice 98 en un emplacement immédiatement adjacent à une pièce de fermeture 110, prévue pour être fixée sous la plaque déflectrice 98, dans la partie de cette plaque située au-delà du bord périphérique du disque obturateur 40. A cet effet, la pièce 110 comporte un bord intérieur 112, en arc de cercle, qui complète le bord périphérique de la partie en creux 74 formée dans la plaque 56 formant couvercle, lorsque la plaque déflectrice 98 et la pièce 110 sont fixées dans l'évidement rectangulaire 94. Dans sa partie centrale adjacente au bord intérieur 112 en arc de cercle, la pièce 110 présente sur sa face inférieure une échancrure 114 permettant le passage du tambour rotatif 20.

Une partie de l'air admis par la branche 62c de la rainure 62 chemine ainsi par le trou 104, puis par le couloir 106, jusqu'à l'encoche 108 par laquelle cet air assure le balayage de la face supérieure du disque obturateur 40, dans la zone périphérique de ce dernier située entre la région 48, 50 ou 52 du disque qui se trouve en face de la sonde 22 et le bord périphérique de ce disque. Ainsi, lorsque c'est la fenêtre circulaire 48 qui se trouve en face de la sonde, une protection efficace de la face supérieure du disque dans la zone comprise entre la fenêtre 48 et la partie adjacente du bord périphérique du disque obturateur est obtenue, ce qui ne serait pas le cas si la protection était assurée simplement par l'air acheminé par le fraisage 102.

Il est à noter que la répartition de l'air entre les trois emplacements qui correspondent aux régions 48, 50 et 52 du disque obturateur 40 est assurée d'une manière telle que le débit d'air soit sensiblement égal pour chacun de ces emplacements.

Pour compléter la protection de la face supérieure du disque obturateur 40, on voit également sur la figure 3 que la plaque 56 formant couvercle est traversée par deux autres trous 116 et 118 qui débouchent respectivement par leur extrémité supérieure à proximité de l'extrémité de la branche 62a de la rainure 62 et dans la branche 62c de la rainure 62. Ces deux trous 116 et 118 débouchent directement sur la face inférieure de la plaque 56 formant couvercle, à l'intérieur de la partie en creux 74, en des emplacements situés à proximité du bord périphérique de cette partie et à environ 60° de part et d'autre de l'axe de l'alésage 92, par rapport à l'axe de rotation du disque obturateur 40. On réalise ainsi une protection complémentaire de la face supérieure du disque obturateur 40, dans la zone périphérique de ce disque qui est amenée à défiler devant la sonde de mesure 22 lorsque le disque tourne autour de son axe.

Enfin, la reprise de l'air de protection qui est injecté au-dessus du disque obturateur 40 par les différents passages qui viennent d'être décrits en détail, est assurée par un passage 120 qui traverse successivement la plaque 56 formant couvercle et la plaque distributrice 54, pour déboucher dans une tubulure de sortie illustrée schématiquement en 122 sur la figure 1, fixée sur la plaque distributrice 54 par exemple au moyen de vis (non représentées).

Le passage 120 débouche sur la face inférieure de la plaque 56 formant couvercle au-delà du bord périphérique de la partie en creux 74, dans une zone située à l'opposé de l'alésage 92 apte à recevoir la sonde de mesure 22, par rapport au passage constitué par les trous 96 et par le fraisage 102, par lequel l'air de protection est injecté sur la face supérieure de la région du disque obturateur qui se trouve en face de la sonde de mesure. En d'autres termes, la partie du passage 120 usinée dans la plaque 56 formant couvercle se trouve à l'opposé des trous 96 par rapport à l'alésage 92.

Grâce à l'agencement qui vient d'être décrit en détail en se référant notamment à la figure 3, on réalise une protection particulièrement efficace des différentes zones de la face supérieure du disque obturateur 40 appelées à se trouver devant la sonde de mesure 22 et de la face inférieure de cette sonde, sans qu'il soit nécessaire d'injecter un débit élevé de gaz risquant d'engendrer des turbulences conduisant à des dépôts de solution sur la sonde. Ainsi, un débit d'air d'environ 9 l/min, sous une pression de 0,2 bar est suffisant pour parvenir au résultat souhaité. De façon comparable, la dépression assurant le reprise d'air par le passage 120 peut également être très faible (par exemple, 5 à 35 mm de colonne d'eau).

Bien entendu, l'invention n'est pas limitée au mode de réalisation qui vient d'être décrit à titre d'exemple, mais en couvre toutes les variantes. En particulier, on comprendra aisément que la réalisation pratique des différents passages permettant d'assurer la distribution de l'air ou du gaz de protection au-dessus du disque peut subir de nombreuses modifications sans sortir du cadre de l'invention comme défini dans les revendications.

## Revendications

1. Appareil de mesure de l'activité α d'une solution, comprenant une cuve (10) apte à recevoir la solution, fermée par un couvercle (16) ; un tambour (20) monté rotatif sur un axe horizontal à l'intérieur de la cuve, de façon à tremper dans la solution présente dans cette dernière ; des moyens (24) d'entraînement du tambour en rotation dans un sens donné ; une sonde de mesure (22) de rayonnement α, montée au-dessus du tambour ; des moyens (62, 80, 98) de soufflage d'un gaz de protection dans une partie haute de la cuve ; et des moyens (120) de reprise de ce gaz ; caractérisé par le fait qu'il comprend de plus un disque obturateur (40), monté rotatif sur un axe vertical (42), à l'intérieur de la cuve, de façon à pouvoir présenter entre le tambour (20) et la sonde de mesure (22) une région de mesure comportant une fenêtre (48), une région de contrôle de qualité de la chaîne de mesure comportant une source de référence (50) et une région pleine (52), décalées de 120° l'une par rapport à l'autre autour dudit axe vertical ; lesdits moyens de soufflage comprenant une tubulure d'entrée (49) de gaz de protection, raccordée sur des passages (62, 66, 68, 94, 104, 116, 118) traversant le couvercle (16) de la cuve et débouchant au-dessus du disque obturateur (40) en au moins trois emplacements situés en face de chacune desdites régions, lesdits passages ayant des sections telles que le gaz de protection est distribué en chacun des trois emplacements sensiblement avec le même débit ; lesdits moyens de reprise comprenant une tubulure de sortie (122) de gaz de protection, traversant également le couvercle (16) de la cuve.

2. Appareil de mesure selon la revendication 1, caractérisé par le fait qu'un premier (102) desdits passages, chemine dans le couvercle (16) selon une direction sensiblement horizontale, orthogonale à l'axe horizontal du tambour, et coïncidant avec le sens de rotation de ce dernier, pour déboucher au-dessus du disque obturateur (40) par une ouverture circulaire (100) située au-dessous de la sonde de mesure (22).

3. Appareil de mesure selon la revendication 2, caractérisé par le fait que la tubulure de sortie (122) débouche dans la cuve (10) en une zone située à l'opposé de la sonde de mesure (22), par rapport au premier passage (102).

4. Appareil de mesure selon la revendication 3, caractérisé par le fait que la zone où débouche la tubulure de sortie (122) est située au-delà d'un bord périphérique du disque obturateur (40).

5. Appareil de mesure selon l'une quelconque des revendications 2 à 4, caractérisé par le fait que lesdits passages comprennent également un passage dérivé (106) qui débouche au-dessus du disque obturateur (40) entre ladite ouverture circulaire (100) et une partie adjacente d'un bord périphérique du disque.

6. Appareil de mesure selon l'une quelconque des revendications précédentes, caractérisé par le fait qu'une deuxième et une troisième (66, 68) desdits passages débouchent dans la cuve (10) en deux emplacements situés à 120° de la sonde de mesure (22), par rapport à l'axe vertical du disque obturateur (40), par deux évidements circulaires (70, 72) munis de tamis (80).

7. Appareil de mesure selon la revendication 6, caractérisé par le fait que chacun des tamis (80), comporte une encoche (86) qui débouche à proximité d'un bord périphérique du disque obturateur (40).

8. Appareil de mesure selon l'une quelconque des revendications précédentes, caractérisé par le fait que lesdits passages comprennent également des passages (116, 118) de moindre section, qui débouchent au-dessus d'une zone périphérique du disque obturateur (40), entre lesdits emplacements.

## Patentansprüche

1. Meßgerät für die α-Aktivität einer Lösung, umfassend eine Wanne (10) zur Aufnahme der Lösung, verschlossen durch einen Deckel (16); eine Trommel (20), im Innern der Wanne drehbar auf eine Horizontalachse montiert, so daß sie in die in dieser Wanne vorhandene Lösung eintaucht; Drehantriebseinrichtungen (24) der Trommel in eine bestimmten Richtung; eine α-Strahlungs-Meßsonde (22), über der Trommel angebracht; Einrichtungen (62, 80, 98) zum Blasen eines Schutzgases in einen oberen Teil der Wanne; und Entnahmeeinrichtungen (120) dieses Gases;
**dadurch gekennzeichnet**,
daß es außerdem eine Verschlußscheibe (40) umfaßt, im Innern der Wanne drehbar auf einer Vertikalachse (42) angebracht, so daß zwischen der Trommel (20) und der Meßsonde (22) eine Meßzone, umfassend ein Fenster (48), eine Qualitätskontrollzone der Meßkette, umfassend eine Bezugsquelle (50), und eine volle Zone (52) vorhanden ist, um 120° gegeneinander versetzt um diese Vertikalachse herum; daß besagte Blaseinrichtungen eine Schutzgas-Zuleitung (49) umfassen, an Durchlässe (62, 66, 68, 94, 104, 116, 118) angeschlossen, die den Deckel (16) der Wanne durchqueren und über der Verschlußscheibe (40) an wenigstens drei Stellen münden, jeder der genannten Zonen gegenüberstehend, wobei besagte Durchlässe solche Querschnitte haben, daß im wesentliche an jeder der drei Stellen die gleiche Menge Schutzgas austritt; daß die Entnahmeeinrichtungen eine Schutzgas-Ableitung (122) umfassen, die ebenfalls den Deckel (16) der Wanne durchquert.

2. Meßgerät nach Anspruch 1, dadurch gekennzeichnet, daß ein erster (102) der genannten Durchlässe in dem Deckel (16) in einer im wesentlichen horizontalen Richtung verläuft, rechtwinklig zur Achse der Trommel und übereinstimmend mit der Drehrichtung dieser letzteren, um über der Verschlußscheibe (40) durch eine kreisförmige öffnung (100) zu münden, die sich unterhalb der Meßsonde (22) befindet.

3. Meßgerät nach Anspruch 2, dadurch gekennzeichnet, daß die Ableitung (122) in der Wanne (10) in einer Zone mündet, die sich in entgegengesetzter Richtung zur Meßsonde (22) befindet, bezogen auf den ersten Durchlaß (102).

4. Meßgerät nach Anspruch 3, dadurch gekennzeichnet, daß die Zone, wo die Ableitung (122) mündet, sich jenseits eines Umfangrands der Verschlußscheibe (40) befindet.

5. Meßgerät nach einem der Ansprüche 2 bis 4, dadurch gekennzeichnet, daß die genannten Durchlässe ebenfalls einen abgeleiteten bzw. sekundären Durchlaß (106) umfassen, der über der Verschlußscheibe (40) mündet, zwischen der kreisrunden Öffnung (100) und einem an einen Umfangrand der Scheibe angrenzenden Teil.

6. Meßgerät nach einem der vorangehenden Ansprüche, dadurch gekennzeichnet, daß ein zweiter und ein dritter (66, 68) von besagten Durchlässen in der Wanne (10) an zwei Stellen münden, um 120° zur Meßsonde (22) versetzt in bezug auf die Vertikalachse der Verschlußscheibe (40), durch zwei kreisförmige Aussparungen bzw. Ausschnitte (70, 72), versehen mit Sieben (80).

7. Meßgerät nach Anspruch 6, dadurch gekennzeichnet, daß jedes der Siebe (80) einen Einschnitt (86) umfaßt, der sich in der Nähe eines Umfangrands der Verschlußscheibe öffnet (40).

8. Meßgerät nach einem der vorangehenden Ansprüche, dadurch gekennzeichnet, daß besagte Durchlässe ebenfalls Durchlässe (116, 118) kleineren Querschnitts umfassen, die über einer Randzone der Verschlußscheibe (40) münden, zwischen den genannten Stellen.

## Claims

1. Apparatus for measuring the α activity of a solution comprising a vessel (10) able to receive the solution and which is sealed by a cover (16), a drum (20) mounted so as to rotate on a horizontal shaft within the vessel, so as to be immersed in the solution present in the latter, means (24) for rotating the drum in a given direction, a probe (22) for measuring the α radiation and fitted above the drum, means (62,80,98) for blowing a protective gas into an upper part of the vessel and means (120) for recovering said gas, characterized in that it also comprises a sealing disk (40) mounted so as to rotate on a vertical shaft (42), within the vessel, so as to be able to present between the drum (20) and the measuring probe (22) a measuring region having a window (48), a region for checking the quality of the measuring chain having a reference source (50), and a solid region (52), which are displaced by 120° with respect to one another about said vertical shaft, said blowing means having a protective gas supply tube (49), connected to passages (62,66,68,94,104,116,118) traversing the cover (16) of the vessel and issuing above the sealing disk (40) in three locations positioned facing each of the said regions, said passages having sections such that the protective gas is distributed at each of the three locations substantially with the same flow rate, the recovery means having a protective gas discharge tube (122),which also traverses the cover (16) of the vessel.

2. Measuring apparatus according to claim 1, characterized in that a first (102) of said passages passes into the cover (16) in a substantially horizontal direction, orthogonal to the horizontal axis of the drum and coinciding with the rotation directon of the latter, in order to issue above the sealing disk (40) by a circular opening (100) located below the measuring probe (22).

3. Measuring apparatus according to claim 2, characterized in that the discharge tube (122) issues into the vessel (10) in an area located opposite to the measuring probe (22) with respect to the first passage (102).

4. Measuring apparatus according to claim 3, characterized in that the area in which issues the discharge tube (122) is located beyond a peripheral edge of the sealing disk (40).

5. Measuring apparatus according to any one of the claims 2 to 4, characterized in that the passages also comprise a branched passage (106), which issues above the sealing disk (40) between said circular opening (100) and an adjacent portion of the peripheral edge of the disk.

6. A measuring apparatus according to any one of the preceding claims, characterized in that a second and a third (66,68) of said passages issue into the vessel (10) at two locations located at 120° from the measuring probe (22), with respect to the vertical axis of the sealing disk (40), by two circular recesses (70,72) provided with screens (80).

7. Measuring apparatus according to claim 6, characterized in that each of the screens (80) has a notch (86), which issues in the vicinity of a peripheral edge of the sealing disk (40).

8. Measuring apparatus according to any one of the preceding claims, characterized in that said passages also comprise passages (116,118) having a smaller section, which issue above a peripheral area of the sealing disk (40) between the said locations.
